Europäisches Patentamt

**European Patent Office**

Office européen des brevets

(11) Publication number: **0 098 696**
**A1**

# EUROPEAN PATENT APPLICATION

(21) Application number: **83303397.0**

(51) Int. Cl.³: **G 21 C 3/26**, G 21 C 3/16

(22) Date of filing: **13.06.83**

(30) Priority: **24.06.82 US 391541**

(43) Date of publication of application: **18.01.84**
Bulletin 84/3

(84) Designated Contracting States: **BE CH DE FR GB IT LI NL SE**

(71) Applicant: **EXXON NUCLEAR COMPANY,**
**600, 108 Avenue, N.E., Bellevue Washington, 00777 (US)**

(72) Inventor: **Kilian, Douglas Carrol, 4246 West Klamath,**
**Kennewick Washington (US)**

(74) Representative: Pitkin, Robert Wilfred et al, ESSO
Engineering (Europe) Ltd. Patents & Licences Apex
Tower High Street, New Malden Surrey KT3 4DJ (GB)

(54) Fuel element for nuclear reactor.

(57) A cylindrical fuel element having a sheath (11) contains a central core (12) of particulate depleted urania or other particulate fuel(s) of low enrichment. The central core is surrounded by an outer annular volume (13) of one or more particulate highly enriched fuels, thus providing a radial enrichment gradient ecross the fuel cross-section. The higher enriched particulate fuel is concentrated close to the sheath (11) and more nuclear events will take place near the sheath surface. The thermal efficacy of the fuel element is increased due to the shortened thermal conductance pathways through the poorly conductive urania. The fuel element's operating fuel centerline temperature at a given power output is significantly reduced. Preferably the particulate fuels are mixtures of three types of substantially spherical particles of different diameter sizes.

FIELD OF THE INVENTION:

This invention pertains to an improved nuclear fuel rod, and more particularly to a nuclear fuel rod having a radial enrichment gradient which provides for a reduced operating temperature at a given power output.

BACKGROUND OF THE INVENTION:

Conventional fuel rod design features a zirconium alloy sheath which is filled with fissile fuel such as urania pellets. The urania pellets are sintered and ground to close dimensional tolerances in order to provide good thermal contact with the sheath. In recent times, it has been discovered that the contact between the pellets and sheath can lead to a chemical interaction that can cause cracks and splitting of the sheath. The splitting of the sheath inside a reactor can result in leakage of radioactive materials. The adjacent cooling water surrounding the fuel rods may become contaminated necessitating a shut-down of the reactor.

In order to prevent this type of failure, newer fuel rod designs have been proposed, wherein fissile fuel is fabricated in spherical or particulate form. Hybrid designs using both pellet and spherical fuel combinations are well-known, as shown in United States Patent Nos. 3,778,348; issued: December 11, 1973, and 4,131,511; issued: December 26, 1978, respectively.

The use of spherical or particulate fuel, also referred to as "Sphere-Pac" reduces the peak contact stress between the fuel and the zirconium alloy sheath. The resulting decrease in surface interaction reduces the probability that cracks and splitting will occur in the sheathing.

The utilization of spherical fuels for reducing sheathing failures, has not, however, resolved the problem of inefficient thermal transfer between fuel and sheathing. In order to improve thermal conductance, some patents advocate mixing graphite with the fissile particulate, as shown in Canadian Patent No. 953,437; issued: August 20, 1974.

The use of graphite, however, can reduce urania ($UO_2$) at high temperatures to produce carbon monoxide gas. The carbon monoxide degrades the fuel rod performance, and the use of carbon in the fuel is, therefore, not a viable solution.

The present invention teaches how to use spherical fuel in a new way. A center portion of the fuel rod is filled with depleted urania or other fuels of low enrichment. The depleted fuel is then surrounded by an outer annulus of higher enriched fuel, thus providing a radial enrichment gradient across the fuel cross-section. By concentrating the enriched fuel closer to the sheath surface, more nuclear events will take place near the sheath. This improves the thermal efficacy of the fuel rod by shortening the thermal conductance pathways through the poorly conductive urania. Thus, the fuel rod's operating fuel centerline temperature at a given power output is significantly reduced.

DISCUSSION OF RELATED ART:

The aforementioned inventions described in U.S. Patent Nos. 3,778,348 and 4,131,511, are an opposite teaching to that of the invention. These patents teach placing the enriched fuel at the core or center of the fuel rod. This results in having to provide a greater volume of enriched material at the center of the rod, and in longer thermal paths to the sheath surface. The net result of these fuel rod designs is that the fuel rod is less thermally efficient, and operates at a higher temperature. Because higher temperatures also increase fission gas release and the stress in the sheath, there is a greater possibility of sheath splitting and cracking. Therefore, these designs are self-defeating with respect to preventing splitting and cracking of the sheath.

The present invention "synergistically" prevents sheath failures by: (1) lowering the operating temperature of the fuel rod; and (2) by using spherical fuel to reduce fuel sheathing contact interactions.

BRIEF SUMMARY OF THE INVENTION:

The invention relates to a fuel element or fuel rod for use in a nuclear reactor. Fuel material is housed within an elongated sheath. A radial enrichment gradient is formed in the fuel material by the use of at least two different fuel enrichments. A center portion of the fuel rod comprises a low enriched fissile fuel and an outer annular portion comprises a substantially higher enriched fuel. The radial enrichment gradient allows the fuel rod to operate at a lower temperature for a given power output. The fuel rod comprises particulate fuel.

For the purposes of definition, the term "particulate fuel" or "particulate fissile fuel" shall mean: a powdered fuel, spherical fuel, a mixture of powdered and spherical fuels, and a mixture of different sized powders and/or different sized spherical fuels.

The fuel rod comprises substantially only particulate fuel of at least two different enrichments. Again, the higher enrichment occupies an outer portion of the fuel material.

The range of enrichments for the inner and outer elements can be as follows:

Center portion - depleted urania 0.2% U-235 to any enrichment desired by the neutronics design maximum, typically 2% U-235

Outer annular portion - would range from approximately 2.00% U-235 to 20.00% U-235

Other fissile isotopes as plutonium and/or Uranium - 233 can be applied with or in place of Uranium - 235. Also thoria can be used as the inner element in place of urania.

The particulate fuel in this invention can be one of, or a mixture of two, or a mixture of three different sphere diameter sizes in the ranges of: 1500-600; 400-100; and below 50 microns, respectively. The three size fractions can be mixed to achieve a 90 percent smear density.

The fuel design of the invention allows for an equal to or larger fuel volume in the annulus portion. Typically, the ratio by volume percent between the annulus and center portion is 70/30. Normally, the fuel volume ratio in percent between the outer annulus and center portion will range anywhere from: 90/10 to 50/50.

Urania is a relatively poor thermal conductor. The present invention overcomes the poor thermal conduction of the Urania, by placing the greater enrichment close to the sheath. The thermal conductance path to the cool sheath surface is shortened, such that the operating fuel centerline temperature at a given power output is significantly reduced. This results in less strain and stress in the sheath material. Because the fissile fuel expands to a greater extent than the sheath material at higher temperatures, the lowered temperature reduces this expansion and consequently the strain on the sheath. Also, the fuel will release less fission gas at lower operating temperatures, such that the internal pressure upon the sheath is reduced and helium conduction paths are not degraded in the fuel by the fission gases. Also less volatile fission products such as iodine, cesium, cadium, etc. will deposit on the sheath inner surface. These elements promote under stress a chemically assisted stress corrosion cracking of the zircaloy sheath.

It is an object of this invention to provide an improved fuel element for use in a nuclear reactor;

It is another object of the invention to provide a fuel rod which can operate at a lower temperature for a given power output; and

It is a further object of this invention to provide a fuel element whose design will reduce the possibility of the sheathing cracking and splitting.

These and other objects of this invention will become more apparent and will be better understood with reference to the following detailed description considered in conjunction with the accompanying drawings.

BRIEF DESCRIPTION OF THE DRAWINGS:

Figure 1 is an axial sectional view of a fuel rod of this invention; and

Figure 2 is an enlarged cross-sectional view of Figure 1 as viewed along lines 2-2;

DETAILED DESCRIPTION OF THE INVENTION:

The invention relates to fuel rods for use in nuclear reactors. One of the major concerns with fuel rod design and operation is the possibility of the cracking or splitting of the sheath (cladding) housing the fissile fuel. Cracks may occur in the sheath due to the chemical interaction between the zirconium alloy sheath and the urania fuel. Cracks may also occur due to stresses induced in the sheath by internal gas pressure or swelling of the urania pellets.

The present invention features a unique fuel rod design which reduces the probability of cracking in the sheath, and which improves the thermal efficiency.

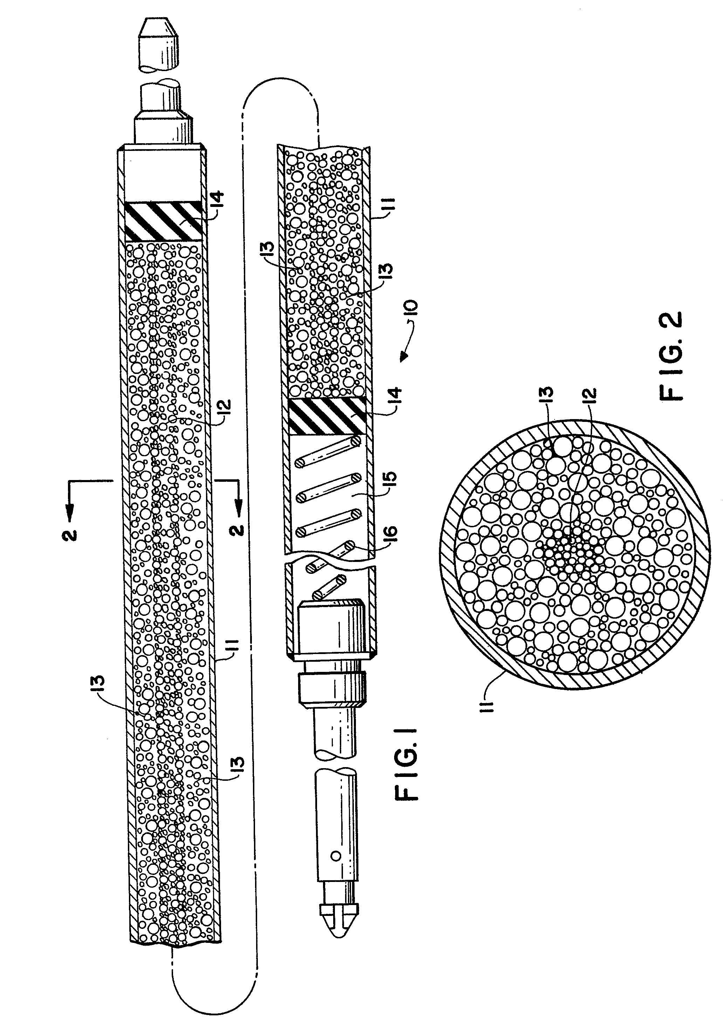

Now referring to Figure 1, a sectional view of a fuel rod 10 is shown. The fuel rod 10 is also shown in an enlarged cross-sectional view of Figure 2. An elongated zircaloy sheath 11 houses a fissile fuel with radial enrichment gradient. The fissile fuel comprises a center or core of low enriched or depleted particulate mixture 12, which is encompassed by another particulate fuel mixture 13 of substantially higher enrichment. The particulate fuel mixture 13 occupies an annular portion within the sheath about the particulate core 12 (Figure 2).

The sheath 11 has a plug 14 on each distal end to hold the fuel material in place. At the bottom of the rod is a plenum 15 containing a coil spring 16. The plenum 15 allows the fuel column to expand or contract during operation. The coil spring 16 provides the necessary compression to maintain fuel column integrity.

The core 12 is comprised of depleted or low enriched fissile fuel, such as urania ($UO_2$). The core can be designed to have a weight range of between 0.2 and 2.0 percent U-235. Other fissile isotopes such as plutonium or U-233 can be utilized in place of, or in combination with the U-235. Thoria can also be used in place of, or in combination with the Urania.

The particulate is composed of three distinct spherical sizes. The spheres have three ranges of diameter sizes: 1500-600; 400-100; and below 50 microns. The choice of sphere sizes allows the spheres to pack to a smear density of 90%.

The core particulate 12 and particulate 13 are respectively loaded into the sheath 11, by a process and apparatus similar to that described in European Publications 81378 and 81379. The core particulate 12 is deposited by means of a tubular lance disposed in the sheath 11. The outer particulate 13 is deposited around the tubular lance, while the lance is carefully withdrawn to avoid mixing of particulate 12 with particulate 13.

The density of the particulate can be controlled to provide lower values. This will prevent fuel swelling at high burn-up. The density of the particulate can be varied by changing the fraction of each diameter size of the mixture. A typical mixture of particulate will be comprised of 58% of the 1500-600 micron-sized spheres. 20% of the 400-100 micron-sized spheres and 22% of the below 50 micron-sized spheres.

The particulate 13 has a volumetric ratio with respect to the particulate 12 in a percentage range of from 90/10 to 50/50.

A typical volume ratio is 70% to 30%.

The placement of the enriched fissile fuel in the outer annular portion of the fuel rod 10, provides for a greater number of fission events in proximity to the zircaloy sheath. The heat energy is supplied to the sheath at a shorter mean distance, such that there is improved thermal conductance. The center operating temperature of the fuel is reduced by hundreds of degrees centigrade for a given power output, as is shown in Table I, below:

TABLE I

CENTER FUEL TEMPERATURES OF HYBRID AND
REFERENCE FUEL DESIGNS, CALCULATED AT NOMINAL
BWR STEADY STATE OPERATING POWER, 25KW/M (7.5Kg/Ft)

| Fuel Type | Center*/Annulus Volume Ratio | Beginning of Life, T Max $^{\circ}C$ |
|---|---|---|
| Reference Pellet 8 X 8 | 0/100 | 984 |
| Hybrid Annular Pellet & Sphere 8 X 8 | 10/90 | 869 |
| Hybrid Annular Pellet & Sphere 8 X 8 | 30/70 | 780 |
| Sphere 8 X 8 | 0/100 | 973 |
| Sphere with Radial Enrichment Gradient 8 X 8 | 30/70 | 666 |

---

\* Average enrichment 3.78 with maximum outer enrichment of 5.00 used in the above calculations.

The use of particulate fuel in contact with the sheath will reduce the probability of sheath failure via cracking and splitting. The radial enrichment gradient developed across the cross-section of the fuel material will lower the operating temperature of the fuel rod which will also result in reducing the probability of cracking of the sheath.

The reduction of the probability of sheathing failure is synergistic, and is greater than the combined reduction of this probability if separately applied by each methodology.

This unique synergism is a result of some of the following factors:

1. Reduction of the fuel center operating temperature by the radial enrichment gradient produces less fuel expansion and thus less stress on the sheathing.

2. The reduced fuel temperature and thermal expansion allows the use of smaller fuel-sheath gaps which will also produce lower fuel operating temperatures.

3. Reduced fuel operating temperatures also will result in less fission gas release to the rod helium atmosphere and this will reduce any rise in fuel operating temperature as burnup progresses due to either helium bulk or gap conductance effects.

4. Spherical fuel in contact with the sheathing distributes the hoop stress evenly and provides no radial cracks which would provide a fission product transport tunnel from the hot fuel interior.

5. Annular fuel provides stress relief by deformation of fuel into the fuel center and also produces less pellet ridging at the pellet ends and less stress on the sheathing as burnup increases.

CLAIMS:

1. A fuel element, for use in a nuclear reactor, comprising a fuel material housed within an elongated sheath; characterised in that the fuel material comprises particulate fuels of at least two different enrichments, one or more low enriched particulate fuels occupying an inner volume within the sheath and one or more higher, preferably substantially higher, enriched particulate fuels occupying an outer volume around, preferably substantially concentrically, the lower enriched particulate inner volume within the sheath; whereby a radial enrichment gradient is provided within the fuel material as a whole resulting, in use, in an improved operating temperature for the fuel element.

2. A fuel element as claimed in claim 1, wherein the inner volume comprises one or more particulate fissile fuels with an enrichment of approximately 0.2 to 2.0 percent by weight of uranium.

3. A fuel element as claimed in claim 1 or claim 2, wherein the inner volume comprises one or more particulate depleted fissile fuels selected from urania (235), urania (233), plutonium, and thoria.

4. A fuel element as claimed in any preceding claim, wherein the outer volume comprises one or more particulate fissile fuels with an enrichment of approximately 2.0 to 20.0 percent by weight of uranium.

5. A fuel element as claimed in any preceding claim, wherein the outer volume comprises one or more particulate fissile fuels selected from urania (235), urania (233), and plutonium.

6. A fuel element as claimed in any preceding claim wherein the particulate fuels each comprise a mixture of sphere-like particles in three diameter size ranges in microns of approximately: 1500 to 600; 400 to 100; and below 50.

7. A fuel element as claimed in claim 6 wherein the particulate fuels have a smear density in an approximate range of 85 to 90 percent.

8. A fuel element as claimed in any one of claims 1 to 5, wherein the particulate fuels comprise sphere-like particles of an approximate diameter in microns of between 1500 to 600, or between 400 to 100, or below 50.

9. A fuel element as claimed in any preceding claim, wherein the volumetric ratio of the outer volume to the inner volume is in the percentage range of 90/10 to 50/50.

FIG. 1

FIG. 2

## EUROPEAN SEARCH REPORT

European Patent
Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-A-2 019 829 (BELGONUCLEAIRE)<br>* Page 5, lines 27-35; page 9, lines 14-36; page 10, lines 1-34; page 11, lines 1-3; page 13, lines 8-36; page 14, lines 1-8; claims 1-5; figures 1,13-15 * | 1,3,5 | G 21 C 3/26<br>G 21 C 3/16 |
| A | | 6,8 | |
| Y | GB-A-1 216 468 (U.K.A.E.A.)<br>* Page 1, lines 61-79; page 2, lines 28-42; claims 1,5,6; figure * | 1,3,5 | |
| A | US-A-4 134 941 (M. HROVAT et al.)<br>* Column 2, lines 25-41; column 5, lines 25-68; column 6, lines 1-48; claims 1,2; figure 1 * | 1,3,5<br>6,8,9 | |
| A | FR-A-2 081 008 (BELGONUCLEAIRE ET CENTRE D'ETUDE DE L'ENERGIE NUCLEAIRE)<br>* Page 3, lines 4-18; claim 1 * | 7 | TECHNICAL FIELDS SEARCHED (Int. Cl. ³)<br><br>G 21 C 3/00<br>G 21 C 21/00 |
| A | BE-A- 624 223 (U.K.A.E.A.)<br>* Page 3, lines 23-34; page 4, lines 1-7; claims 1-3 * | 1-5 | |

-/-

The present search report has been drawn up for all claims

| Place of search<br>THE HAGUE | Date of completion of the search<br>16-09-1983 | Examiner<br>ASSI G.A. |
|---|---|---|

**European Patent Office**

**EUROPEAN SEARCH REPORT**

Application number

EP 83 30 3397

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. 3) |
| A | DE-A-1 564 236 (KERNFORSCHUNGSANLAGE JÜLICH) * Page 5, lines 33-35; page 6, lines 1-30; claims; figure * | 1,5 | |
| A | US-A-3 407 116 (R. CLOUGH) * Column 1, lines 10-27; column 2, lines 64-72; column 3, lines 1-5, 48-51; claims 1-5; figures 1-3 * | 1,3,5 | |
| A | PATENTS ABSTRACTS OF JAPAN, vol. 3, no. 144(M-82), 28th November 1979 & JP - A - 54 121 386 (TOKYO SHIBAURA DENKI K.K.) 20-09-1979 * Whole abstract * | 1,9 | |
| D,A | US-A-3 778 348 (J.D. SEASE et al.) * Whole document * | 1,3,5 8 | TECHNICAL FIELDS SEARCHED (Int. Cl. 3) |
| D,A | US-A-4 131 511 (W.J. MORDARSKI et al.) * Whole document * | 1,3,5 | |
| D,A | CA-A- 953 437 (R.C. HALLAM et al.) * Claims; figures * | 1,3,5 | |

The present search report has been drawn up for all claims

| Place of search THE HAGUE | Date of completion of the search 16-09-1983 | Examiner ASSI G.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82